# FASCICULE DE BREVET EUROPEEN

(11) **EP 1 250 834 B1**
(45) Date de publication et mention de la délivrance du brevet: **29.03.2006**
(21) Numéro de dépôt: 02360114.9
(22) Date de dépôt: 02.04.2002
(51) Int. Cl.: A01D 57/20

(54) **Machine de fenaison comportant un dispositif de regroupement d'andains**
Heuwerbungsmaschine mit Schwadgruppierungsvorrichtung
Haymaking machine with windrow regrouping device

(30) Priorité: 18.04.2001 FR 0105266
(43) Date de publication de la demande: 23.10.2002
(73) Titulaire: KUHN S.A., 67706 Saverne Cedex (FR)
(72) Inventeur: Walch, Martin, 67490 Detwiller (FR); Wilhelm, Joel, 57820 Saint-Louis (FR)
(74) Mandataire: Andres, Jean-Claude

(56) Documents cités:
- EP-A- 0 406 766
- EP-A- 0 439 991
- WO-A-99/33332
- DE-A- 19 645 629
- FR-A- 610 659
- FR-A- 2 559 344
- FR-A- 2 792 163
- US-A- 2 666 518
- US-A- 4 392 339

## Description

La présente invention se rapporte à une faucheuse de végétaux pouvant être attelée à un tracteur et comportant un bâti portant un mécanisme de coupe et un dispositif groupeur permettant de regrouper sur un andain double les végétaux coupés en deux passages ou de former un andain simple, lequel dispositif groupeur se compose d'un premier organe de déplacement des végétaux vers le côté arrière de la machine et d'un deuxième organe de déplacement des végétaux vers un côté latéral de la machine, lequel deuxième organe de déplacement est articulé sur un support au moyen d'axes sensiblement horizontaux et alignés entre eux, autour duquel il peut être déplacé pour être rapproché ou être écarté du premier organe de déplacement pour la formation d'un andain double ou d'un andain simple.

Un dispositif groupeur de ce type permet de positionner le premier organe de déplacement très près du mécanisme de coupe ou d'un mécanisme de conditionnement qui est associé audit mécanisme de coupe. Il reçoit ainsi la totalité du fourrage en provenance de ces mécanismes. Cela évite toute perte de fourrage entre ces derniers et ledit organe de déplacement.

Sur une machine connue dans le prospectus "KMT/KMR 2400 - 3000 - 3200" de la Société VICON, le premier et le deuxième organes de déplacement forment un ensemble porté par des bras qui sont articulés sur le bâti.

Pour la formation d'un andain simple, les deux organes de déplacement sont basculés vers l'arrière et vers le haut, autour d'axes sensiblement horizontaux situés à l'avant desdits organes, de manière à ce que le fourrage tombe directement sur le sol à la sortie du mécanisme de conditionnement. Dans cette position, les deux organes de déplacement qui s'étendent assez loin vers l'arrière et vers le haut sont très encombrants. Ils gênent alors la visibilité du conducteur vers l'arrière. Ils provoquent aussi une usure prématurée de l'ensemble et peuvent même déséquilibrer la machine lorsqu'elle travaille sur un terrain avec d'importantes dénivellations.

La faucheuse connue dans la demande de brevet EP 406 766 comporte une barre de coupe, un rotor de conditionnement et un convoyeur pour déplacer les végétaux coupés vers un côté de la machine en vue de la formation d'andains doubles. Sur cette machine le rotor de conditionnement doit faire passer les végétaux de la barre de coupe sur le convoyeur. Ce dernier est articulé sur le bâti de la faucheuse au moyen d'axes horizontaux situés à l'avant dudit convoyeur et autour desquels il peut être déplacé d'une manière importante vers l'arrière et vers le haut afin de l'écarter du rotor de conditionnement et faire en sorte que les végétaux projetés par ce dernier retombent directement sur le sol. Dans cette position écartée, le convoyeur présente aussi ces inconvénients de gêner la visibilité vers l'arrière, de provoquer une usure prématurée de l'ensemble et de déséquilibrer la machine lorsqu'elle travaille sur un terrain avec d'importantes dénivellations.

La présente invention a pour but de proposer une machine telle que décrite dans l'introduction avec un dispositif groupeur simple et ne présentant pas les inconvénients précités des machines connues.

A cet effet, une importante caractéristique de l'invention consiste en ce que les axes d'articulation du deuxième organe de déplacement du dispositif groupeur se situent à proximité du côté arrière dudit deuxième organe de déplacement. Dans ce cas, le premier organe reste en place et déplace constamment le fourrage vers l'arrière. Pour la formation d'un andain simple, le fourrage tombe sur le sol entre les deux organes de déplacement. Le déplacement du seul deuxième organe est assez simple. L'agencement des axes d'articulation permet d'obtenir, en faisant pivoter l'avant du deuxième organe de déplacement autour desdits axes d'articulation, l'espace nécessaire au passage du fourrage vers le sol pour la formation d'un andain simple. Ledit pivotement peut être assuré à l'aide d'un vérin hydraulique.

Selon une autre caractéristique de l'invention, des déflecteurs repliables sont disposés sous le deuxième organe de déplacement. Ces déflecteurs sont dirigés vers le bas lorsque le deuxième organe de déplacement est écarté. Ils guident alors le fourrage vers le sol et évitent son éparpillement. D'autre part, ces déflecteurs sont repliés vers le haut dans une position sensiblement horizontale, lorsque le deuxième organe de déplacement est rapproché du premier organe de déplacement. Cette position pourra également être retenue pour le transport. Ces déflecteurs repliés sont ainsi éloignés du sol et ne risquent pas de rester accrochés à d'éventuels obstacles.

Selon une autre caractéristique de l'invention, le deuxième organe de déplacement est constitué par une bande transporteuse passant sur des rouleaux. Au moins un de ces rouleaux est monté sur une pièce porteuse qui est liée à un pivot actionné par un ressort. Celui-ci assure une traction sur ledit pivot de sorte qu'il pousse le rouleau vers l'extérieur pour tendre constamment la bande transporteuse d'une manière optimale.

Selon une autre caractéristique de l'invention, un rouleau de la bande transporteuse est entraîné en rotation au moyen d'un moteur hydraulique qui est relié à une pompe au moyen de tuyaux et qui est commandé à l'aide d'un distributeur hydraulique. L'actionnement de ce dernier est avantageusement combiné avec la commande du vérin hydraulique qui fait pivoter le deuxième organe de déplacement autour de son axe d'articulation. La liaison entre la pompe et le moteur hydraulique est alors automatiquement coupé lorsque ledit vérin hydraulique fait pivoter le deuxième organe de déplacement dans la position où il est éloigné du premier organe de déplacement. Inversement, ladite liaison est automatiquement rétablie lorsque le vérin hydraulique fait pivoter le deuxième organe de déplacement dans la position où il est rapproché du premier organe de déplacement.

D'autres caractéristiques et avantages de l'invention ressortiront de la description ci-après d'un exemple de réalisation non limitatif de l'invention, avec référence aux dessins annexés dans lesquels :
- la figure 1 représente une vue de côté, avec une coupe partielle, d'une machine selon l'invention ;
- la figure 2 représente une vue de dessus de la machine selon l'invention ;
- la figure 3 représente à plus grande échelle le dispositif groupeur d'andains dans une première position de travail ;
- la figure 4 représente à plus grande échelle le dispositif groupeur d'andains dans une seconde position de travail ;
- la figure 5 représente une vue de détail, avec une coupe partielle, du deuxième organe de déplacement.

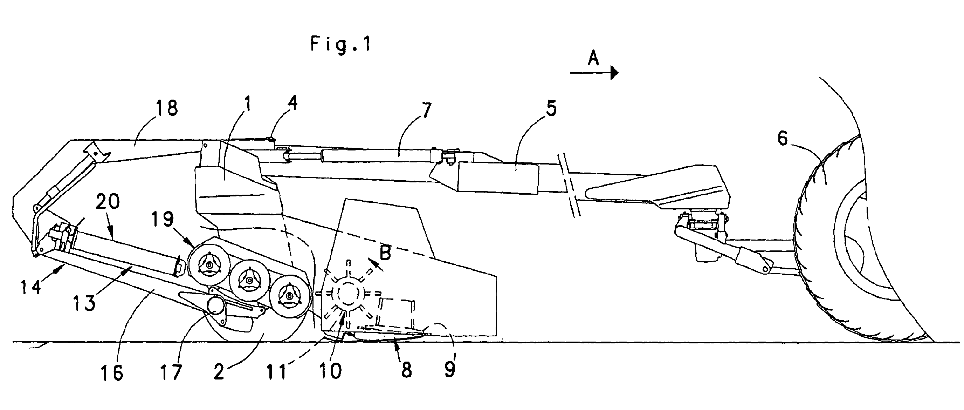

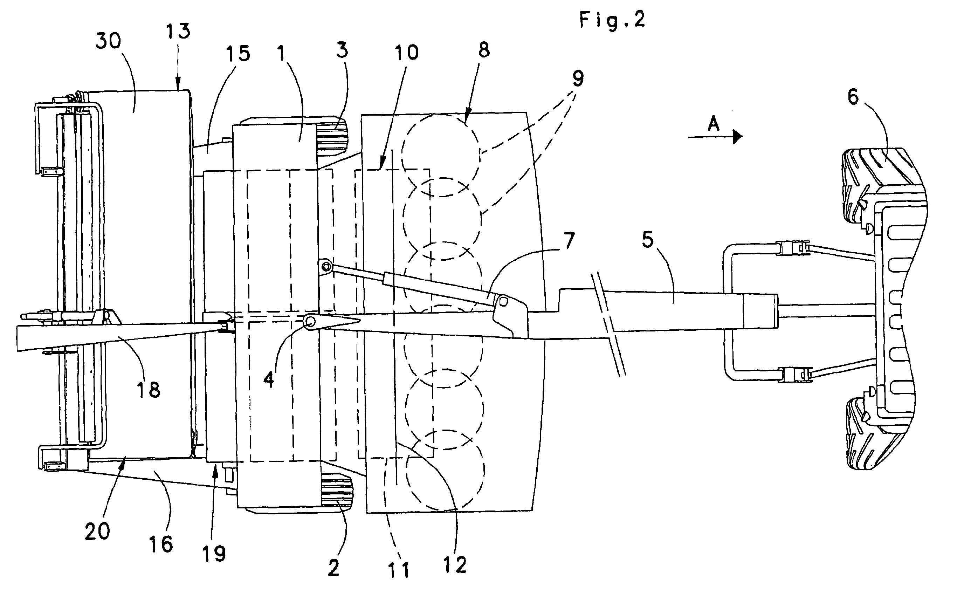

Telle qu'elle est représentée sur les figures 1 et 2, la faucheuse selon l'invention comporte un bâti (1) en forme de U renversé et équipé de deux roues d'appui (2 et 3). Sur ce bâti (1) est articulé, au moyen d'un axe sensiblement vertical (4), un timon (5) permettant l'attelage à un tracteur (6). Celui-ci sert à animer et à déplacer la faucheuse dans la direction d'avancement indiquée par la flèche A. La position du bâti (1) par rapport au timon (5) peut être modifiée à l'aide d'un vérin hydraulique (7). Ce dernier permet de faire varier l'angle que forme le bâti (1) avec le timon (5) pour le transposer dans au moins une position de transport dans laquelle il se situe dans le prolongement du tracteur (6) (figure 2) et au moins une position de travail dans laquelle il est décalé latéralement par rapport au tracteur (6).

Ledit bâti (1) comporte un mécanisme de coupe (8) apte à suivre les dénivellations du sol. Ce mécanisme (8) présente une pluralité d'outils de coupe tels que des disques (9) qui comportent des couteaux et qui sont disposés suivant une ligne sensiblement perpendiculaire à la direction d'avancement (A). Pour la coupe, lesdits disques (9) sont entraînés en rotation autour d'axes dirigés vers le haut, depuis un arbre de prise de force du tracteur. Les moyens d'entraînement peuvent être constitués par des roues dentées logées dans un carter situé sous les disques (9), des carters de renvoi et des arbres de transmission non représentés. Le bâti (1) porte également un mécanisme de conditionnement (10) qui est associé au mécanisme de coupe (8). Ledit mécanisme de conditionnement (10) est notamment réalisé sous la forme d'un rotor (11) destiné à accélérer le séchage des végétaux coupés. A cet effet, ledit rotor (11) est monté de manière à pouvoir tourner autour d'un axe sensiblement horizontal (12) et comporte des fléaux qui fragmentent la pellicule extérieure des tiges des végétaux. L'entraînement en rotation du rotor (11) peut également être assuré à partir de l'arbre de prise de force du tracteur.

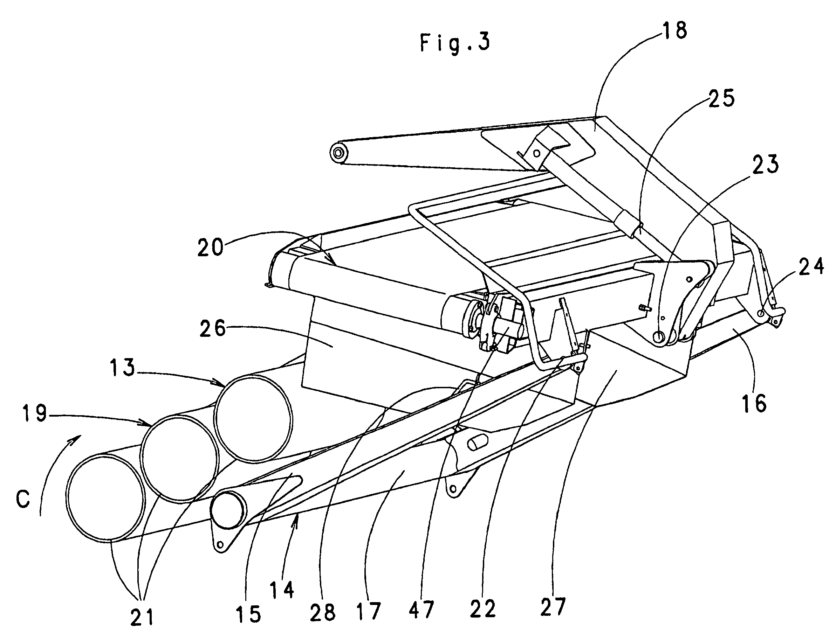

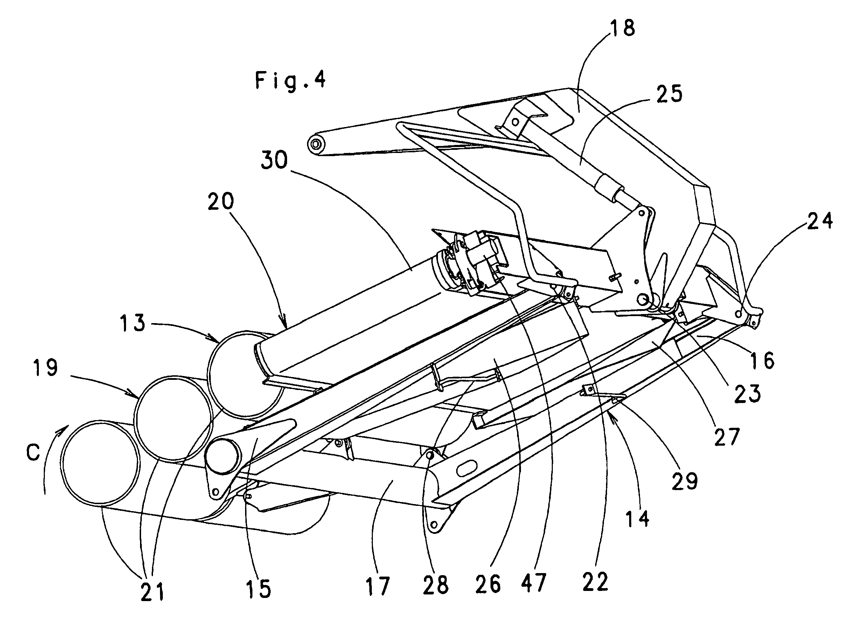

Le bâti (1) de la machine porte en sus un dispositif groupeur (13) permettant de regrouper sur un andain double les végétaux coupés en deux passages successifs ou de former un andain simple. Comme cela ressort des figures 3 et 4, ce dispositif groupeur (13) est monté sur un support (14) qui est constitué par deux bras latéraux (15 et 16) reliés par une traverse (17) et qui se situent sous ledit dispositif (13) et par un bras central (18) qui s'étend par-dessus ledit dispositif (13). La traverse (17) avec les deux bras latéraux (15 et 16) est fixée à la partie inférieure du bâti (1) tandis que le bras central (18) est fixé à sa partie supérieure (voir figure 1). Le dispositif groupeur (13) se compose d'un premier organe de déplacement (19) des végétaux vers le côté arrière de la machine et d'un deuxième organe de déplacement (20) des végétaux vers un côté latéral de la machine. Le premier organe de déplacement (19) se situe à proximité du mécanisme de conditionnement (10). Il est par exemple formé par trois tambours horizontaux (21) placés côte à côte et supportés par la traverse (17). Les tambours (21) peuvent être entraînés en rotation par un moteur hydraulique afin de déplacer les végétaux sur leurs côtés supérieurs vers l'arrière, en direction du deuxième organe de déplacement (20).

Le deuxième organe de déplacement (20) est monté sur le support (14) de manière à pouvoir être rapproché ou être écarté du premier organe de déplacement (19) pour la formation d'un andain double ou d'un andain simple. A cet effet, il est avantageusement articulé sur le support (14) au moyen d'axes (22, 23, 24) sensiblement horizontaux et alignés entre eux. Ces axes se situent à proximité du côté arrière du deuxième organe de déplacement (20). Ce dernier est pivotable autour desdits axes (22 à 24) en vue d'obtenir le rapprochement et l'écartement précités. Un vérin hydraulique (25) est articulé, d'une part, sur le deuxième organe de déplacement (20) et, d'autre part, sur le bras central (18) du support (14). Ce vérin (25) assure, lorsqu'il est actionné pour s'allonger ou se raccourcir, les pivotements précités du deuxième organe de déplacement (20) autour des axes (22, 23, 24).

Deux déflecteurs repliables (26 et 27) sont disposés sous le deuxième organe de déplacement (20). Chacun de ces déflecteurs (26 et 27) est formé par une tôle de forme sensiblement rectangulaire. Chacun est articulé sur la structure du deuxième organe de déplacement (20) et est en sus relié à l'un des bras (15 et 16) du support (14) des organes de déplacement (19 et 20) au moyen de tringles (28 et 29). Celles-ci sont articulées sur lesdits bras (15 et 16) et sur lesdits déflecteurs (26 et 27). Chaque tringle (28, 29) déplace le déflecteur (26, 27) correspondant dans une position où il est dirigé obliquement vers le bas, lorsque le deuxième organe de déplacement (20) est écarté du premier organe de déplacement (19). Inversement, elle le déplace dans une position sensiblement horizontale, en le faisant pivoter vers le haut autour de son axe d'articulation sur la structure du deuxième organe de déplacement (20), lorsque ce dernier est rapproché du premier organe de déplacement (19).

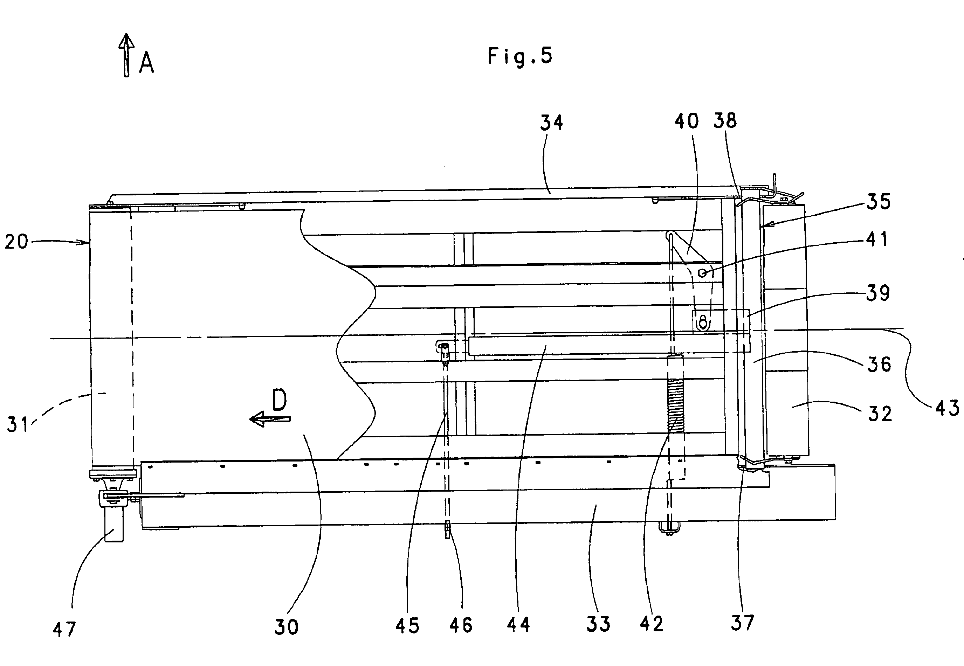

Le deuxième organe de déplacement (20) est constitué par une bande transporteuse (30) passant sur des rouleaux (31 et 32) qui sont dirigés dans la direction d'avancement (A) et qui sont guidés sur des longerons (33 et 34). Il ressort notamment de la figure 5 que le rouleau (32) est monté sur une pièce porteuse (35) comprenant notamment une traverse (36). Les extrémités de cette traverse (36) sont guidées dans des trous allongés horizontalement (37 et 38) des longerons (33 et 34) de manière à pouvoir être déplacées pour tendre la bande transporteuse (30). Ladite traverse (36) comporte un premier bras (39) qui est relié à une extrémité d'un pivot (40) qui est articulé sur un axe (41) sensiblement vertical. Un ressort de traction (42) est accroché à une autre extrémité de ce pivot (40) et l'actionne de sorte qu'il pousse la traverse (36) et le rouleau (32) vers le côté extérieur et les éloigne du rouleau (31). Le premier bras (39) est légèrement décalé par rapport à un plan de symétrie (43) de la bande transporteuse (30), de la traverse (36) et du rouleau (32). De ce fait, la poussée du pivot (40) tend également à faire pivoter la traverse (36) et le rouleau (32) dans le plan horizontal.

La traverse (36) comporte un deuxième bras (44) qui s'étend parallèlement au premier bras (39). Une tige partiellement filetée (45) est articulée à l'extrémité libre du deuxième bras (44). Cette tige s'étend perpendiculairement audit bras (44) et dépasse latéralement de la bande transporteuse (30). Elle permet d'effectuer une traction ou une poussée sur le deuxième bras (44), lequel oriente alors la traverse (36) et le rouleau (32) dans le plan horizontal. Ceci permet, d'une part, de contrecarrer le pivotement précité dans le plan horizontal de la traverse (36) et du rouleau (32) qui est provoqué par le ressort (42) et le pivot (40) et, d'autre part, d'amener le rouleau (32) dans une position ou la bande transporteuse (30) est parfaitement centrée sur ledit rouleau (32). La tige (45) peut être immobilisée dans la position appropriée au moyen d'écrous (46).

L'animation de la bande transporteuse (30) est assurée au moyen d'un moteur hydraulique (47) qui entraîne le rouleau (31) en rotation. Ce moteur (47) est relié à l'aide de tuyaux à une pompe hydraulique pouvant être disposée sur le tracteur. La marche et l'arrêt du moteur (47) peuvent être commandés avec un distributeur hydraulique qui ouvre ou ferme le passage de l'huile entre ladite pompe et le moteur (47). L'actionnement dudit distributeur peut être effectué manuellement, mais il peut aussi avantageusement être combiné avec la commande du vérin hydraulique (25) qui fait pivoter le deuxième organe de déplacement (20) autour de ses axes d'articulation (22 à 24). Cette combinaison est telle que le passage entre la pompe et le moteur hydraulique (47) est automatiquement fermé lorsque ledit vérin hydraulique (25) fait pivoter le deuxième organe de déplacement (20) dans la position où il est éloigné du premier organe de déplacement (19) et que ledit passage est automatiquement ouvert lorsque le vérin hydraulique (25) fait pivoter ce deuxième organe de déplacement (20) dans la position où il est rapproché du premier organe de déplacement (19). Dans ce cas, l'entraînement de la bande transporteuse (30) du deuxième organe de déplacement (20) et son arrêt sont obtenus automatiquement avec le changement de position de l'organe de déplacement (20), sans que l'utilisateur n'ait à intervenir.

La commande du vérin hydraulique (25) qui fait pivoter le deuxième organe de déplacement (20) autour de ses axes d'articulation (22 à 24) peut avantageusement être combinée avec la commande du vérin hydraulique (7) qui fait pivoter le timon (5) autour de l'axe d'articulation (4) sur le bâti (1). Cette combinaison est telle que lorsque le vérin hydraulique (7) est commandé, à l'aide d'un distributeur, pour qu'il se déplace dans une première position de travail dans laquelle le timon (5) forme un certain angle avec le bâti (1), le vérin hydraulique (25) est automatiquement commandé de sorte qu'il écarte le deuxième organe de déplacement (20) du premier organe (19). A l'inverse, lorsque le vérin hydraulique (7) est commandé pour qu'il se déplace dans une deuxième position de travail dans laquelle le timon (5) forme un angle différent avec le bâti (1), le vérin hydraulique (25) est automatiquement commandé de sorte qu'il rapproche le deuxième organe de déplacement (20) du premier organe (19). Lesdites positions du timon (5) par rapport au bâti (1) peuvent correspondre à des positions de travail à droite et à gauche du tracteur (6) qui permettent le travail en aller-retour. Le positionnement du deuxième organe de déplacement (20) peut ainsi être obtenu sans intervention particulière de l'utilisateur lors du passage d'une position de travail dans l'autre.

Au travail, la machine est tirée par le tracteur (6) dans la direction (A). Le bâti (1) est décalé latéralement par rapport au tracteur (6), au moyen du vérin hydraulique (7) qui fait tourner le timon (5) autour de l'axe d'articulation (4). De ce fait, le tracteur (6) ne roule pas sur les végétaux devant être coupés. Le mécanisme de coupe (8) est abaissé et glisse sur le sol. Les disques (9) sont entraînés en rotation de sorte que leurs couteaux coupent les végétaux dans les parties avant de leurs trajectoires. Lesdits végétaux sont alors repris par le rotor (11) du mécanisme de conditionnement (10) qui tourne dans le sens de la flèche (B). Celui-ci fragmente la pellicule extérieure des tiges des végétaux pour accélérer leur séchage. Ces végétaux arrivent ensuite sur le premier organe de déplacement (19) qui les déplace vers l'arrière de la machine. Pour cela, les tambours (21) sont entraînés en rotation dans le sens de la flèche (C) et font passer les végétaux de l'un à l'autre.

Lors d'un premier passage avec la machine, le deuxième organe de déplacement (20) est écarté du premier organe de déplacement (19) comme cela est représenté sur la figure 3. Les végétaux tombent alors sur le sol à l'arrière dudit premier organe (19). Ils sont guidés par les déflecteurs (26 et 27) afin de constituer un andain de largeur relativement régulière. Au passage suivant, le deuxième organe de déplacement (20) peut être rapproché du premier organe de déplacement (19) au moyen du vérin hydraulique (25) (figure 4). Le rouleau (31) est alors entraîné en rotation par le moteur hydraulique (47) qui peut être actionné en même temps que le vérin (25) précité. La bande (30) se déplace alors dans le sens de la flèche (D) et déplace les végétaux latéralement pour qu'ils tombent sur l'andain formé au passage précédent. Cela permet de regrouper deux andains en vue de faciliter le ramassage des végétaux.

Lorsque la machine selon l'invention est utilisée pour travailler en faisant des allers et retours sur le même côté d'une parcelle, le châssis (1) est déplacé, lors de chaque demi-tour, sur le côté opposé du tracteur (6) à l'aide du vérin hydraulique (7). La commande de ce vérin hydraulique (7) peut également actionner automatiquement le vérin hydraulique (25) de sorte qu'à l'aller le deuxième organe de déplacement (20) soit écarté du premier organe (19) et qu'au retour ledit deuxième organe (20) soit rapproché de ce dernier. Ainsi, à l'aller les végétaux tombent directement sur le sol entre les deux organes (19 et 20) et au retour ils sont déplacés latéralement par le deuxième organe de déplacement (20) en vue de former un andain double. Le sens de déplacement de la bande (30) peut être inversé si l'utilisateur veut déposer le fourrage sur le côté opposé de la machine.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans pour autant sortir du domaine de protection tel qu'il est défini dans les revendications.

## Revendications

1. Faucheuse de végétaux pouvant être attelée à un tracteur et comportant :
- un bâti (1),
- un mécanisme de coupe (8) porté par ledit bâti (1) et auquel peut être associé un mécanisme de conditionnement (10),
- un dispositif groupeur (13) permettant de regrouper sur un andain double les végétaux coupés en deux passages ou de former un andain simple, lequel dispositif groupeur (13) se compose :
- d'un premier organe de déplacement (19) des végétaux vers le côté arrière de la machine et
- d'un deuxième organe de déplacement (20) des végétaux vers un côté latéral de la machine, lequel deuxième organe de déplacement (20) est articulé sur un support (14) d'axes (22, 23, 24), sensiblement horizontaux et alignés entre eux, autour desquels il peut être déplacé pour être rapproché ou être écarté du premier organe de déplacement (19) pour la formation d'un andain double ou d'un andain simple,
***caractérisée par le fait* que** les axes d'articulation (22, 23, 24) du deuxième organe de déplacement (20) se situent à proximité du côté arrière dudit deuxième organe de déplacement (20).

2. Machine selon la revendication 1, ***caractérisée par le fait* que** le deuxième organe de déplacement (20) est pivotable autour des axes d'articulation (22, 23, 24) au moyen d'un vérin hydraulique (25).

3. Machine selon l'une quelconque des revendications précédentes, ***caractérisée par le fait* que** des déflecteurs repliables (26 et 27) sont disposés sous le deuxième organe de déplacement (20).

4. Machine selon la revendication 3, ***caractérisée par le fait* que** les déflecteurs (26 et 27) sont articulés sur le deuxième organe de déplacement (20) et sont reliés au support (14) du dispositif groupeur (13) au moyen de tringles (28 et 29).

5. Machine selon la revendication 3 ou 4, ***caractérisée par le fait* que** les déflecteurs (26 et 27) sont dirigés obliquement vers le bas par les tringles (28 et 29) lorsque le deuxième organe de déplacement (20) est écarté du premier organe de déplacement (19).

6. Machine selon la revendication 3, 4 ou 5, ***caractérisée par le fait* que** les déflecteurs (26 et 27) sont repliés dans une position sensiblement horizontale par les tringles (28 et 29) lorsque le deuxième organe de déplacement (20) est rapproché du premier organe de déplacement (19).

7. Machine selon l'une quelconque des revendications précédentes, ***caractérisée par le fait* que** le deuxième organe de déplacement (20) est constitué par une bande transporteuse (30) passant sur des rouleaux (31 et 32).

8. Machine selon la revendication 7, ***caractérisée par le fait* qu'**au moins un rouleau (32) est monté sur une traverse (36) qui est reliée à un pivot (40) actionné par un ressort (42).

9. Machine selon la revendication 7, ***caractérisée par le fait* qu'**un rouleau (31) est entraîné en rotation au moyen d'un moteur hydraulique (47) qui est relié à une pompe au moyen de tuyaux et qui est commandé à l'aide d'un distributeur hydraulique.

10. Machine selon la revendication 9, ***caractérisée par le fait* que** l'actionnement dudit distributeur hydraulique est combiné avec la commande du vérin hydraulique (25) qui fait pivoter le deuxième organe de déplacement (20) autour de ses axes d'articulation (22, 23, 24).

11. Machine selon la revendication 10, ***caractérisée par le fait* que** la liaison entre la pompe et le moteur hydraulique (47) est automatiquement coupée lorsque ledit vérin hydraulique (25) fait pivoter le deuxième organe de déplacement (20) dans la position où il est éloigné du premier organe de déplacement (19) et que ladite liaison est automatiquement rétablie lorsque le vérin hydraulique (25) fait pivoter le deuxième organe de déplacement (20) dans la position où il est rapproché du premier organe de déplacement (19).

12. Machine selon l'une quelconque des revendications précédentes, ***caractérisée par le fait* que** le bâti (1) comporte un timon d'attelage (5) qui est articulé sur un axe sensiblement vertical (4) autour duquel il peut être déplacé à l'aide d'un vérin hydraulique (7) dont la commande est combinée avec celle du vérin hydraulique (25) qui fait pivoter le deuxième organe de déplacement (20) autour de ses axes d'articulation (22, 23, 24).

13. Machine selon la revendication 12, ***caractérisée par le fait* que** lors du déplacement du vérin hydraulique (7) situé entre le timon (5) et le bâti (1) dans une première position de travail, le vérin hydraulique (25) qui pivote le deuxième organe de déplacement (20) est commandé de sorte qu'il écarte celui-ci du premier organe de déplacement (19) et que lors du déplacement dudit vérin hydraulique (7) situé entre le timon (5) et le bâti (1) dans une deuxième position de travail, ledit vérin hydraulique (25) qui pivote le deuxième organe de déplacement (20) est commandé de sorte qu'il rapproche ce dernier du premier organe de déplacement (19).

## Claims

1. Haymaking machine for plant matter which can be hitched to a tractor and comprising:
- a frame (1),
- a cutting mechanism (8) carried by the said frame (1) and with which a conditioning mechanism (10) may be associated,
- a grouping device (13) allowing the plant matter cut in two passes to be grouped together into a double windrow or a single windrow to be formed, which grouping device (13) is made up of:
- a first moving member (19) for moving the plant matter toward the rear side of the machine and
- a second moving member (20) for moving the plant matter toward a side of the machine, which second moving member (20) is articulated on a support (14) with axes (22, 23, 24), which are substantially horizontal and aligned with each other, about which it can be displaced so as to be brought closer to or moved away from the first moving member (19) for forming a double windrow or a single windrow,
***characterized in* that** the axes of articulation (22, 23, 24) of the second moving member (20) are located in the vicinity of the rear side of the said second moving member (20).

2. Machine as claimed in claim 1, ***characterized in* that** the second moving member (20) can be pivoted about the axes of articulation (22, 23, 24) by means of a hydraulic ram (25).

3. Machine as claimed in any one of the preceding claims, ***characterized in* that** folding deflectors (26 and 27) are arranged under the second moving member (20).

4. Machine as claimed in claim 3, ***characterized in* that** the deflectors (26 and 27) are articulated to the second moving member (20) and are connected to the support (14) of the grouping device (13) by means of rods (28 and 29).

5. Machine as claimed in claim 3 or 4, ***characterized in* that** the deflectors (26 and 27) are directed obliquely downward by the rods (28 and 29) when the second moving member (20) is moved away from the first moving member (19).

6. Machine as claimed in claim 3, 4 or 5, ***characterized in* that** the deflectors (26 and 27) are folded into a substantially horizontal position by the rods (28 and 29) when the second moving member (20) is brought closer to the first moving member (19).

7. Machine as claimed in any one of the preceding claims, ***characterized in* that** the second moving member (20) consists of a conveyor belt (30) running over rollers (31 and 32).

8. Machine as claimed in claim 7, ***characterized in* that** at least one roller (32) is mounted on a crosspiece (36) which is connected to a pivot (40) operated by a spring (42).

9. Machine as claimed in claim 7, ***characterized in* that** one roller (31) is driven in rotation by means of a hydraulic motor (47) which is connected to a pump by means of pipes and which is controlled using a hydraulic directional-control valve.

10. Machine as claimed in claim 9, ***characterized in* that** the actuation of the said hydraulic directional-control valve is combined with the operation of the hydraulic ram (25) which causes the second moving member (20) to pivot about its axes of articulation (22, 23, 24).

11. Machine as claimed in claim 10, ***characterized in* that** the connection between the pump and the hydraulic motor (47) is automatically cut when the said hydraulic ram (25) causes the second moving member (20) to pivot into the position in which it is away from the first moving member (19) and **in that** the said connection is automatically reestablished when the hydraulic ram (25) causes the second moving member (20) to pivot into the position in which it is close to the first moving member (19).

12. Machine as claimed in any one of the preceding claims, ***characterized in* that** the frame (1) comprises a hitching drawbar (5) which is articulated on a substantially vertical axis (4) about which it can be moved by a hydraulic ram (7), the operation of which is combined with that of the hydraulic ram (25) which causes the second moving member (20) to pivot about its axes of articulation (22, 23, 24).

13. Machine as claimed in claim 12, ***characterized in* that** during the movement of the hydraulic ram (7) situated between the drawbar (5) and the frame (1) into a first work position, the hydraulic ram (25) which pivots the second moving member (20) is operated so that it moves the latter away from the first moving member (19), and ***in* that** during movement of the said hydraulic ram (7) situated between the drawbar (5) and the frame (1) into a second work position, the said hydraulic ram (25) which pivots the second moving member (20) is operated in such a way that it moves the latter closer to the first moving member (19).

## Patentansprüche

1. Mähmaschine für Pflanzen, die an einen Traktor angehängt werden kann und:
- ein Gestell (1),
- einen Schneidmechanismus (8), der von dem Gestell (1) getragen wird und dem ein Konditioniermechanismus (10) zugeteilt sein kann,
- eine Gruppierungsvorrichtung (13), die es ermöglicht, die in zwei Durchgängen abgeschnittenen Pflanzen auf einem doppelten Schwad zu gruppieren oder einen einfachen Schwad zu bilden, wobei sich die Gruppierungsvorrichtung (13) zusammensetzt aus:
- einem ersten Element (19) zum Verschieben der Pflanzen zur hinteren Seite der Maschine, und
- einem zweiten Element (20) zum Verschieben der Pflanzen auf eine Seite der Maschine, wobei das zweite Verschiebeelement (20) auf einer Stütze (14) mit im Wesentlichen horizontalen und zueinander ausgerichteten Achsen (22, 23, 24) angelenkt ist, um die es verschoben werden kann, um dem ersten Verschiebeelement (19) angenähert oder von diesem entfernt zu werden, um einen doppelten oder einfachen Schwad zu bilden,
umfasst, ***dadurch gekennzeichnet,* dass** die Gelenkachsen (22, 23, 24) des zweiten Verschiebeelements (20) sich in der Nähe der Rückseite des zweiten Verschiebeelements (20) erstrecken.

2. Maschine nach Anspruch 1, ***dadurch gekennzeichnet,* dass** das zweite Verschiebeelement (20) um die Gelenkachsen (22, 23, 24) mit Hilfe eines Hydraulikzylinders (25) geschwenkt werden kann.

3. Maschine nach irgend einem der vorhergehenden Ansprüche, ***dadurch gekennzeichnet,* dass** einklappbare Ablenkbleche (26 und 27) unter dem zweiten Verschiebeelement (20) angeordnet sind.

4. Maschine nach Anspruch 3, ***dadurch gekennzeichnet,* dass** die Ablenkbleche (26 und 27) auf dem zweiten Verschiebeelement (20) angelenkt und mit der Stütze (14) der Gruppierungsvorrichtung (13) mit Hilfe von Stangen (28 und 29) verbunden sind.

5. Maschine nach Anspruch 3 oder 4, ***dadurch gekennzeichnet,* dass** die Ablenkbleche (26 und 27) schräg nach unten durch die Stangen (28 und 29) gerichtet sind, wenn das zweite Verschiebeelement (20) vom ersten Verschiebeelement (19) entfernt ist.

6. Maschine nach Anspruch 3, 4 oder 5, ***dadurch gekennzeichnet,* dass** die Ablenkbleche (26 und 27) in eine im Wesentlichen horizontale Position durch die Stangen (28 und 29) eingeklappt werden, wenn das zweite Verschiebeelement (20) dem ersten Verschiebeelement (19) angenähert ist.

7. Maschine nach irgend einem der vorhergehenden Ansprüche, ***dadurch gekennzeichnet,* dass** das zweite Verschiebeelement (20) von einem Förderband (30) gebildet ist, das auf Rollen (31 und 32) läuft.

8. Maschine nach Anspruch 7, ***dadurch gekennzeichnet,* dass** mindestens eine Rolle (32) auf einem Querträger (36) befestigt ist, der mit einem von einer Feder (42) betätigten Zapfen (40) verbunden ist.

9. Maschine nach Anspruch 7, ***dadurch gekennzeichnet,* dass** eine Rolle (31) mit Hilfe eines Hydraulikmotors (47) in Drehung angetrieben wird, der mit einer Pumpe mit Hilfe von Rohren verbunden ist und mit Hilfe eines Hydraulikverteilers gesteuert wird.

10. Maschine nach Anspruch 9, ***dadurch gekennzeichnet,* dass** die Betätigung des Hydraulikverteilers mit der Steuerung des Hydraulikzylinders (25) kombiniert ist, der das zweite Verschiebeelement (20) um seine Gelenkachsen (22, 23, 24) schwenken lässt.

11. Maschine nach Anspruch 10, ***dadurch gekennzeichnet,* dass** die Verbindung zwischen der Pumpe und dem Hydraulikmotor (47) automatisch unterbrochen wird, wenn der Hydraulikzylinder (25) das zweite Verschiebeelement (20) in die Position schwenken lässt, in der es vom ersten Verschiebeelement (19) entfernt ist, und dass diese Verbindung automatisch wieder hergestellt wird, wenn der Hydraulikzylinder (25) das zweite Verschiebeelement (20) in die Position schwenken lässt, in der es dem ersten Verschiebeelement (19) angenähert ist.

12. Maschine nach irgend einem der vorhergehenden Ansprüche, ***dadurch gekennzeichnet,* dass** das Gestell (1) eine Deichsel (5) zum Anhängen umfasst, die auf einer im Wesentlichen vertikalen Achse (4) angelenkt ist, um die sie mit Hilfe eines Hydraulikzylinders (7) verschoben werden kann, dessen Steuerung mit jener des Hydraulikzylinders (25) kombiniert ist, der das zweite Verschiebeelement (20) um seine Gelenkachsen (22, 23, 24) schwenken lässt.

13. Maschine nach Anspruch 12, ***dadurch gekennzeichnet,* dass** bei der Verschiebung des Hydraulikzylinders (7), der sich zwischen der Deichsel (5) und dem Gestell (1) befindet, in eine erste Arbeitsposition, der Hydraulikzylinder (25), der das zweite Verschiebeelement (20) schwenkt, derart gesteuert wird, dass er dieses vom ersten Verschiebeelement (19) entfernt, und dass bei der Verschiebung des Hydraulikzylinders (7), der sich zwischen der Deichsel (5) und dem Gestell (1) befindet, in eine zweite Arbeitsposition, der Hydraulikzylinder (25), der das zweite Verschiebeelement (20) schwenkt, derart gesteuert wird, dass er dieses letztgenannte dem ersten Verschiebeelement (19) annähert.
